# FASCICULE DE BREVET EUROPEEN

(11) **EP 1 072 856 B1**
(45) Date de publication et mention de la délivrance du brevet: **21.05.2003**
(21) Numéro de dépôt: 00402009.5
(22) Date de dépôt: 12.07.2000
(51) Int. Cl.: F41A 25/20, F16F 9/32, F15B 1/027

(54) **Jauge de parage pour récupérateur d'arme de gros calibre**
Füllstandanzeiger für die Rücklaufbremse einer grosskalibrigen Waffe
Level indicator for recuperator brake of a large-calibre weapon

(30) Priorité: 29.07.1999 FR 9909833
(43) Date de publication de la demande: 31.01.2001
(73) Titulaire: GIAT INDUSTRIES, 78000 Versailles (FR)
(72) Inventeur: Charton, Alain, 18340 Crosses (FR); Riot, Jean-Louis, 18000 Bourges (FR)
(74) Mandataire: Célanie, Christian

(56) Documents cités:
- CH-A- 522 870
- GB-A- 191 013 896
- US-A- 4 599 933

## Description

Le domaine technique de la présente invention est celui des jauges de parage de récupérateurs pour masses oscillantes, par exemple pour arme de gros calibre.

Lorsqu'une pièce d'artillerie est montée sur un affût fixe ou mobile, il est nécessaire d'absorber le recul et les déséquilibres engendrés par la mise à feu de la charge propulsive de la munition. De plus, il est nécessaire de ramener l'arme vers l'avant dans sa position initiale pour un nouveau tir. On connaît des systèmes de rappel disposés entre l'affût et la masse oscillante appelés récupérateur. Ils comprennent généralement une première chambre remplie d'un gaz, souvent de l'azote, à laquelle on oppose une deuxième chambre remplie d'un fluide incompressible, généralement de l'huile. Ces deux chambres sont séparées par un piston libre. Lors du parage en huile du récupérateur, on remplit la première chambre d'azote à une pression donnée spécifique au type d'arme sur lequel sera monté le récupérateur, puis on remplit la deuxième chambre d'huile par l'intermédiaire d'une soupape de remplissage de type connu. Pour contrôler le remplissage complet de la chambre d'huile, une jauge est mise en place dans le récupérateur. Ainsi lorsque la chambre d'huile est pleine et que l'on continue à injecter de l'huile, le piston libre séparant les deux chambres se déplace et vient comprimer légèrement l'azote. Cette jauge est l'image du déplacement du piston libre et indique sur une face extérieure du récupérateur la quantité d'huile injectée. Cette jauge comporte un doigt muni de repères symbolisant le niveau correct de remplissage d'huile par rapport à une référence fixe sur le corps du récupérateur.

Deux grandes familles de jauges sont connues : les jauges " directes " et les jauges " indirectes ".

Les jauges dites " directes " sont nommées ainsi parce qu'elles indiquent de manière directe la position du piston libre du récupérateur, c'est à dire qu'elles suivent le mouvement de celui-ci. Ainsi lorsqu'on injecte de l'huile et que le piston se déplace vers l'intérieur de la chambre à gaz en comprimant l'azote, la jauge se déplace dans le même sens et rentre dans le corps du récupérateur. Selon un premier concept équipant un récupérateur connu, la jauge est solidaire d'une face du piston. Etant donné le déplacement important de ce piston lors du recul de l'arme au moment du tir, la jauge doit présenter une longueur équivalente très importante, de l'ordre de 800 mm. Par conséquent le principal inconvénient de ce montage réside dans les fortes contraintes d'encombrement générées par la jauge et les risques que cela comporte pour les artilleurs. Selon un deuxième concept décrit dans les brevets US 4 485 722 et US 4 587 882, la jauge est constituée d'une tige soumise à la poussée d'un puissant ressort qui l'applique contre une face du piston libre. Les principaux inconvénients de ce montage résident dans l'effort permanent que doit subir le ressort et la jauge.

Les jauges dites " indirectes " sont nommées ainsi parce qu'elles indiquent de manière indirecte la position du piston libre du récupérateur. Ainsi lorsque l'on injecte de l'huile et que le piston se déplace vers l'intérieur de la chambre à gaz en comprimant l'azote, la jauge se déplace dans le sens inverse en sortant du corps du récupérateur. Le concept de ces récupérateurs connus utilise deux tiges munies d'une crémaillère à l'une de leurs extrémités, engrenées sur un pignon. Ce montage présente plusieurs inconvénients qui sont la complexité de réalisation de ces pièces, le nombre important de celles-ci et la fiabilité relative dans le temps de fonctionnement. En effet, lors du tir, la jauge est frappée par le retour du piston libre provoquant un matage du système d'engrènement. Ceci conduit, avec le temps, à une usure du mécanisme et à une altération de l'indication de parage.

Le brevet US4599933 décrit un récupérateur comportant un indicateur du niveau de fluide hydraulique. L'indicateur est constitué d'un piston en appui par son extrémité arrière contre un piston libre et en saillie à l'extérieur de la paroi du corps de récupérateur par son extrémité avant. Le piston est poussé au niveau d'une collerette par la pression du fluide hydraulique en étant guidé dans une chambre de l'indicateur.

Ce concept présente comme inconvénient de ne pas fonctionner de manière satisfaisante. En effet, aucune étanchéité n'étant prévue au niveau du guidage dans le corps de l'extrémité arrière du piston de l'indicateur, la pression du fluide peut s'exercer des deux cotés de la collerette du piston, contrariant son bon fonctionnement.

Le but de la présente invention est de concevoir une jauge fiable, ne comportant pas de ressorts maintenus sous contraintes, jauge animée hydrauliquement et apte à indiquer le remplissage et/ou le surremplissage de la chambre d'huile d'un récupérateur.

L'invention a donc pour objet une jauge de parage pour récupérateur d'arme de gros calibre comprenant un tube qui délimite une chambre de gaz et une chambre principale d'un liquide incompressible alimentée par une soupape de remplissage, chambres séparées par un piston, jauge destinée à indiquer le remplissage et/ou le surremplissage de la chambre principale en liquide et comprenant des moyens supports connectés à une extrémité du tube par des moyens de blocage dans lesquels un indicateur est engagé, indicateur pouvant se translater graduellement à l'intérieur d'une chambre secondaire sous l'action de la pression du liquide s'exerçant sur des surfaces d'appui de l'indicateur et rendre ainsi visualisable la quantité de liquide injectée, jauge caractérisée en ce qu'elle comporte une chambre d'air prolongeant la chambre secondaire et séparée de cette dernière par l'indicateur, chambre d'air étant en communication avec le milieu extérieur afin de permettre la circulation de l'air lors des mouvements de translation de l'indicateur à l'intérieur des chambres d'air et secondaire.

Les surfaces d'appui de l'indicateur sont définies de telle sorte que la pression du liquide pousse l'indicateur dans le même sens que le piston.

Les moyens de blocage sont constitués par une rondelle d'arrêt et un écrou vissé sur l'extrémité du tube, traversés tous deux par l'indicateur.

Les moyens supports sont constitués par un porte indicateur et un fourreau, ce dernier délimitant avec l'indicateur ainsi qu'éventuellement avec le porte indicateur la chambre secondaire qui communique avec la chambre principale par l'intermédiaire d'une chambre primaire, une première surface d'appui se trouvant dans la chambre secondaire et ayant une aire supérieure à celle d'une deuxième surface d'appui qui est formée par la combinaison d'une paroi de l'extrémité de l'indicateur côté piston et d'un fond de la chambre primaire, cette différence d'aires assurant la translation de l'indicateur dans le même sens que le piston sous l'action de la pression du liquide.

Avantageusement le piston comprend une rainure reliant la chambre principale à la chambre primaire.

La chambre primaire et la chambre secondaire communiquent par l'intermédiaire d'un canal pratiqué dans l'indicateur.

Selon une première variante de réalisation la chambre d'air est délimitée par le porte indicateur et l'indicateur.

Avantageusement la chambre d'air est en communication avec le milieu extérieur par une gorge et un canal de communication pratiqués dans le porte indicateur et par un perçage réalisé dans le moyen de blocage.

Le fourreau est engagé dans un alésage à une extrémité du porte indicateur, l'indicateur étant supporté d'un côté par le porte indicateur et de l'autre par le fourreau, des moyens d'étanchéité étant prévus respectivement entre l'indicateur et le fourreau, l'indicateur et le porte indicateur, le fourreau et le porte indicateur, et le porte indicateur et le tube.

La soupape de remplissage est solidaire du porte indicateur.

Selon une deuxième variante de réalisation la chambre d'air est délimitée par le porte indicateur, le fourreau et l'indicateur.

Avantageusement la chambre d'air est en communication avec le milieu extérieur par un méplat réalisé sur une génératrice extérieure du fourreau, et relié à un lamage usiné à l'extrémité du porte indicateur, coté soupape de remplissage et un perçage réalisé dans le moyen de blocage.

Le fourreau est engagé dans un alésage à une extrémité du porte indicateur, l'indicateur étant supporté d'un côté par le porte indicateur et de l'autre par le fourreau, des moyens d'étanchéité étant prévus respectivement entre l'indicateur et le fourreau, l'indicateur et le porte indicateur, et le porte indicateur et le tube.

La soupape de remplissage est montée à l'extrémité libre de l'indicateur.

Un tout premier avantage de la jauge selon l'invention réside dans le fait que son déplacement est assuré par des moyens hydrauliques, sans l'intervention d'aucune pièce mécanique sollicitée en permanence.

Un autre avantage de la jauge selon l'invention réside dans le fait qu'elle offre une indication d'un remplissage correcte ou d'un surremplissage éventuel, ceci dans un encombrement faible.

D'autres caractéristiques, détails et avantages de l'invention ressortiront plus clairement à la lecture du complément de description donné ci-après à titre illustratif en relation avec des dessins sur lesquels :
- la figure 1 représente une vue d'ensemble en coupe suivant l'axe XX' d'une jauge de parage selon l'invention montée sur un récupérateur,
- la figure 2 représente une vue d'un détail de la figure 1,
- la figure 3 représente une vue en coupe suivant l'axe XX' d'une variante de réalisation d'une jauge de parage selon l'invention montée sur un récupérateur,
- la figure 4 représente la coupe suivant la figure 3, la jauge de parage étant en position de parage en huile correcte.

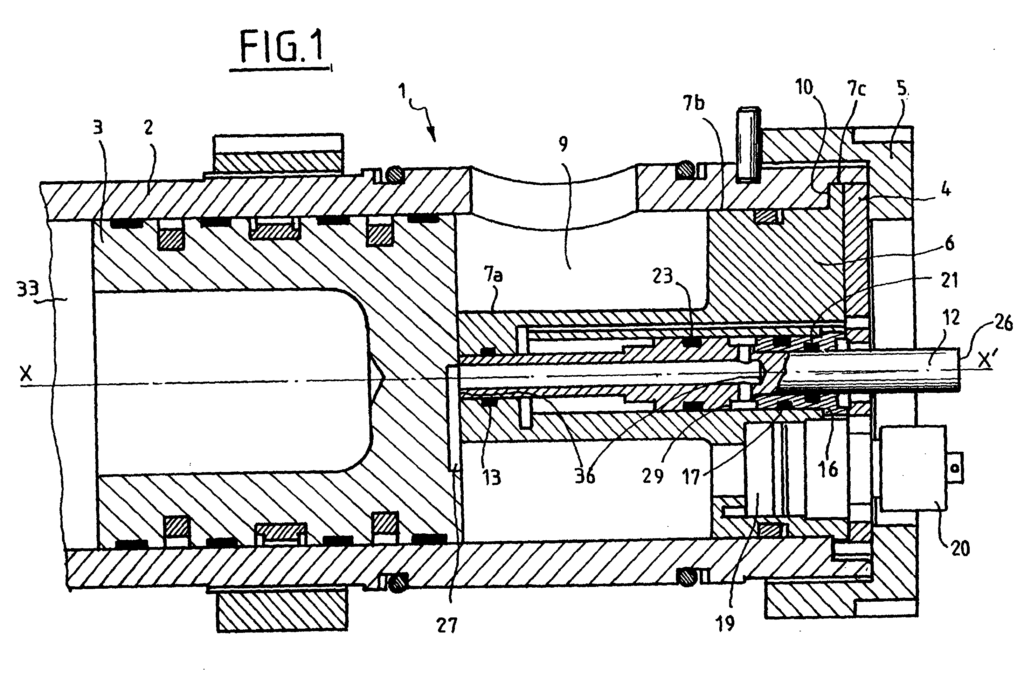

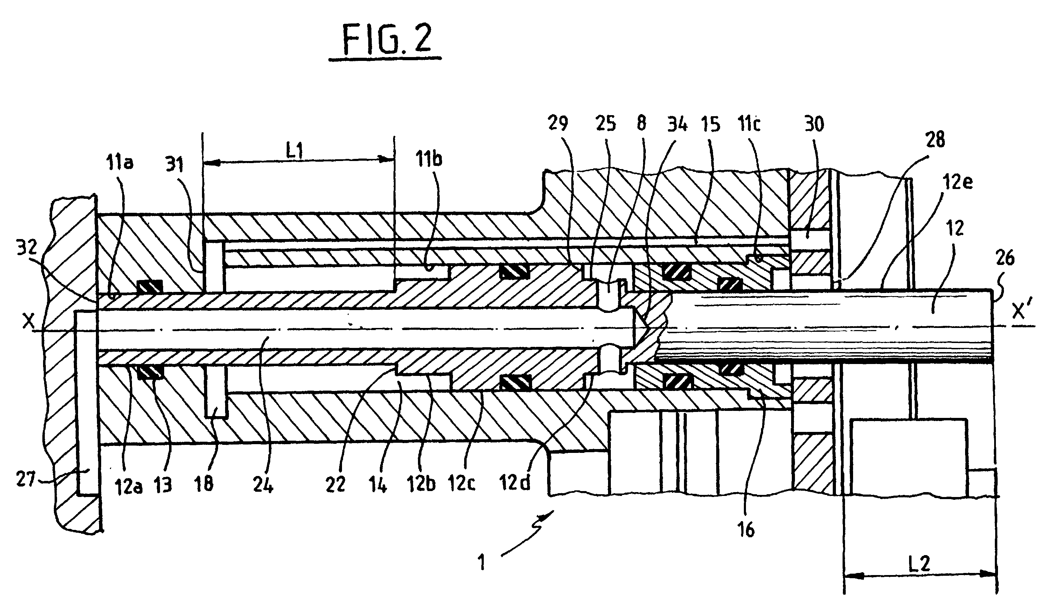

Sur les figures 1 et 2, on a représenté une jauge de parage 1 connectée à l'extrémité d'un tube 2 de récupérateur de type connu, constituée d'un indicateur 12, d'un porte indicateur 6 et d'un fourreau 16, l'indicateur coulissant par rapport à ceux-ci. A l'intérieur du tube 2 coulisse un piston libre 3, séparant une chambre 33 d'un gaz, généralement de l'azote, d'une chambre 9 d'un liquide incompressible, généralement de l'huile. La jauge de parage 1 est rendue solidaire du tube 2 à son extrémité par l'intermédiaire d'une rondelle d'arrêt 4, le tout étant bloqué par un écrou 5 vissé sur le tube 2, la rondelle 4 et l'écrou 5 constituant un moyen de blocage.

Ces figures montrent la jauge de parage 1 constituée d'un porte indicateur 6, formant support, de forme élémentaire cylindrique réalisé en un matériau lui conférant des propriétés de résistance aux contraintes et sollicitations auxquelles il sera soumis au cours de son utilisation. Ce porte indicateur 6 comporte trois tronçons 7a, 7b, 7c, de diamètre croissant. Un épaulement 10, compris entre le tronçon 7b et le tronçon 7c, est pincé entre la rondelle d'arrêt 4 et l'extrémité du tube 2, bloquant ainsi en translation le porte indicateur 6. Le tronçon 7b porte des joints d'étanchéité par rapport au tube 2. Le porte indicateur 6 est traversé sensiblement dans sa partie médiane par un conduit délimitant des alésages de diamètres différents. Un premier alésage 11a reçoit une extrémité de l'indicateur 12, l'étanchéité étant réalisée par un joint 13 de type connu. Un deuxième alésage 11b, de diamètre supérieur à 11a, délimite avec l'indicateur 12 une chambre d'air 14 reliée au milieu extérieur par l'intermédiaire d'un canal 15 pratiqué longitudinalement dans le porte indicateur 6. Ce canal 15 et la chambre d'air 14 sont reliés par une gorge 18 pratiquée sur l'épaulement séparant l'alésage 11a de l'alésage 11b. Le canal 15 est mis en relation avec le milieu extérieur grâce à un perçage 30 usiné dans la rondelle d'arrêt 4.

Un alésage 11c, d'un diamètre supérieur au diamètre de l'alésage 11b est réalisé dans le porte indicateur 6. Les alésages 11c et 11b reçoivent tous deux le fourreau 16. On pratique dans le porte indicateur 6 un logement 19 désaxé par rapport à l'axe XX' afin de recevoir une soupape de remplissage 20 de type connu qui permet d'introduire de l'huile dans la chambre 9. La chambre principale 9 est délimitée par le tube 2, le piston 3 et le porte indicateur 6.

Le fourreau 16, de forme générale tubulaire, est percé sensiblement dans sa partie médiane de manière à recevoir l'indicateur 12. L'étanchéité est assurée, d'une part avec le porte indicateur 6 par un joint torique 17 de type connu, et d'autre part avec l'indicateur 12 par un joint torique 21 de type connu.

L'indicateur 12 se présente sous la forme d'une tige constituée de cinq tronçons de diamètre différent. Un premier tronçon 12a translate dans l'alésage 11a du porte indicateur 6. Ce tronçon 12a est terminé côté piston libre 3 par une paroi annulaire 32. Un deuxième tronçon 12b, d'un diamètre supérieur à 12a, forme un épaulement 22. Un troisième tronçon 12c, d'un diamètre supérieur à 12b, permet de coulisser dans l'alésage 11b, l'étanchéité étant assurée au moyen d'un joint torique 23 de type connu. Un tronçon 12d, d'un diamètre inférieur au tronçon 12c, délimite une surface annulaire d'appui 29. Le cinquième tronçon 12e, d'un diamètre inférieur à 12d, coulisse dans le fourreau 16 et se termine par une extrémité 26. Une chambre secondaire 8 est délimitée entre le fourreau 16, le porte indicateur 6 et l'indicateur 12. Cette chambre est reliée par un canal radial 25 à une chambre primaire 24 pratiquée longitudinalement et partiellement suivant l'axe de l'indicateur. Cette chambre 24 est ouverte du côté piston libre 3 et est limité par un fond 34 du côté soupape de remplissage 20. La chambre primaire 24 coopère avec la chambre principale 9 par une rainure 27 usinée dans le piston libre 3.

La rondelle d'arrêt 4 présente une face 28 du coté du milieu extérieur. Une paroi de fond radiale 31 est définie dans la rainure 18 du porte indicateur 6, coté piston libre 3 L'épaulement 22 est séparé de la paroi de fond 31 de la chambre 14 par une longueur L1 et l'extrémité 26 de l'indicateur 12 est éloignée de la face 28 par une longueur L2 dont l'importance sera expliquée ci-après.

Le fonctionnement est le suivant. Lors de la mise en service du récupérateur, on remplit la chambre 33 en azote à une pression dépendant du type d'arme à gros calibre, par exemple de l'ordre de 90.10⁵ Pa. Le piston libre 3 vient alors en appui contre le porte indicateur 6. Ensuite, on injecte de l'huile dans la chambre 9 par l'intermédiaire de la soupape de remplissage 20. Cette huile remplit la chambre 9, passe dans la rainure 27 et pénètre dans la chambre primaire 24, le canal 25 et la chambre secondaire 8. Sous la pression de l'huile, le piston libre 3 se déplace dans l'autre sens en comprimant l'azote dans la chambre 33. Dans le même temps, l'huile sous pression présente dans la chambre secondaire 8 exerce une force sur la surface d'appui annulaire 29 tendant à maintenir en appui la paroi 32 de l'indicateur 12 contre le piston libre 3 pendant le déplacement de ce dernier. Cette translation dans le même sens que le piston libre 3 est rendue possible car la force engendrée par la pression de l'huile sur la première surface d'appui 29 est supérieure à la force appliquée sur une deuxième surface d'appui 36, formée par la combinaison de la paroi annulaire 32 et du fond 34, l'aire de la première surface d'appui 29 étant supérieure à l'aire de la seconde surface d'appui 36. La quantité d'huile à injecter est visualisable grâce à l'extrémité 26 de l'indicateur 12 et le parage en huile est correct si l'extrémité 26 affleure la face 28 de la rondelle d'arrêt 4. La longueur L1 d'enfoncement possible pour l'indicateur étant supérieure à la longueur L2 en saillie maximale de l'indicateur, la possibilité est offerte à l'indicateur 12 de se déplacer au delà de la face 28. L'extrémité 26 se trouve alors en retrait par rapport à la face 28 et rend ainsi visualisable un surremplissage en huile.

Lorsque l'indicateur 12 se déplace, l'air contenu dans la chambre d'air 14 peut circuler vers le milieu extérieur, et vice versa, via le canal 15 et le perçage 30 pour éviter un blocage pneumatique de l'indicateur 12 contre le porte indicateur 6.

Selon l'invention, l'indicateur 12 est mu en translation par la pression de l'huile qui s'applique sur ses faces d'appui. Lors du parage en huile, l'indicateur suit le piston libre 3 lors de son déplacement et reste ainsi en contact avec lui. Ce contact est obtenu sans qu'il soit nécessaire de prévoir un ressort de rappel.

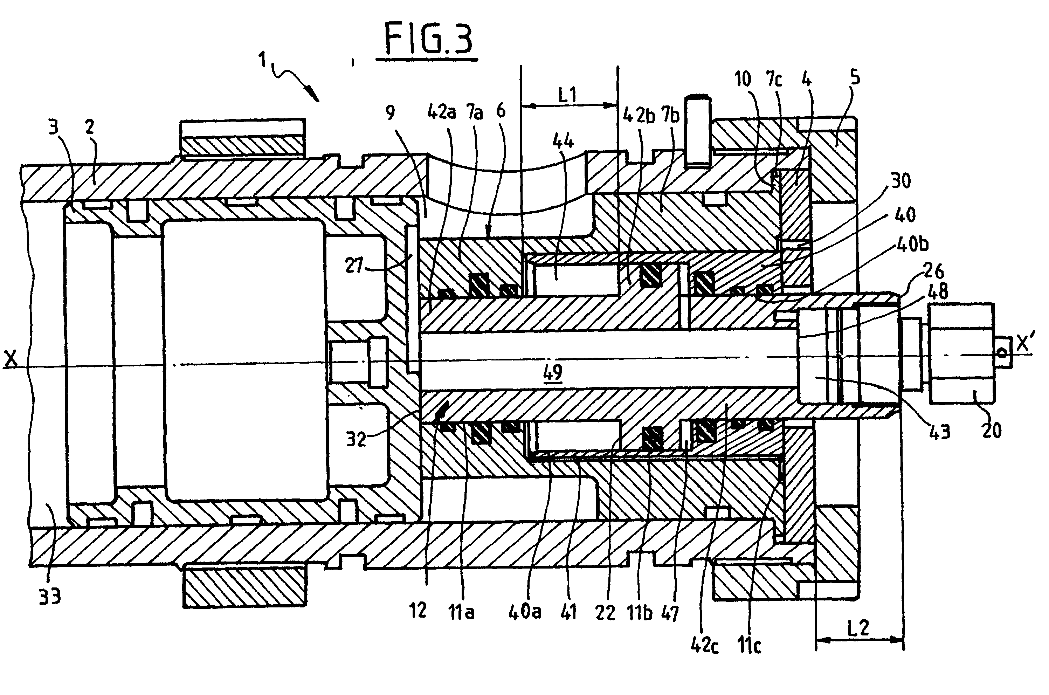

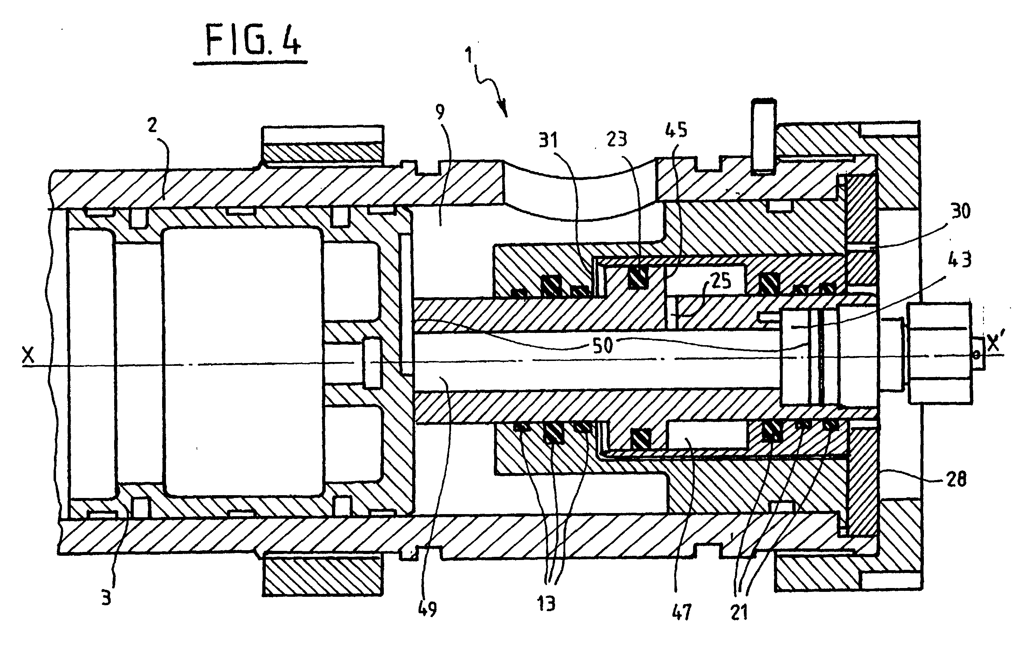

Sur les figures 3 et 4, on a représenté une variante de réalisation de l'invention selon laquelle la soupape de remplissage 20 est montée à l'extrémité libre de l'indicateur 12. La description suivante intègre les différences structurelles qui en découlent, les éléments communs conservant les mêmes références.

Dans ce mode de réalisation, la soupape 20 étant montée à l'extrémité libre de l'indicateur 12, une chambre primaire 49 est alors pratiquée tout le long de cet indicateur. L'huile pénètre par cette soupape d'abord dans l'indicateur 12, puis dans la rainure 27, puis dans la chambre 9. Le porte indicateur 6 est traversé sensiblement le long de son axe médian par un conduit aux alésages de diamètres différents. Sur ces figures, de la gauche vers la droite, on trouve un premier alésage 11a, un deuxième alésage 11b, d'un diamètre supérieur à celui de l'alésage 11a et un lamage 11c de diamètre supérieur à celui de l'alésage 11b. L'alésage 11a reçoit l'indicateur 12, l'étanchéité étant réalisée entre l'indicateur 12 et le porte indicateur 6 par des moyens d'étanchéité 13 simples ou multiples de type connu tels des joints toriques. L'alésage 11b reçoit sur toute sa longueur un fourreau 40, de forme générale tubulaire, constitué de deux tronçons 40a et 40b, l'épaisseur du tronçon 40a étant inférieure à celle du tronçon 40b. Sur une génératrice extérieure du fourreau 40, on pratique un méplat 41 débouchant dans le lamage 11c.

L'indicateur 12 est ici constitué d'une tige comportant trois tronçons de diamètre différent et munie d'un canal radial 25. Un premier tronçon 42a coulisse dans l'alésage 11a du porte indicateur et délimite avec le tronçon 40a du fourreau 40 une chambre d'air 44. Ce tronçon 42a est terminé côté piston libre 3 par une paroi annulaire 32. Un deuxième tronçon 42b, d'un diamètre supérieur à celui du tronçon 42a, coulisse dans le tronçon 40a du fourreau 40 et forme l'épaulement 22 destiné à venir en butée sur le porte indicateur. Un troisième tronçon 42c, d'un diamètre sensiblement égal à celui du tronçon 42a, coulisse dans l'alésage 40b du fourreau 40. L'étanchéité entre l'indicateur 12 et le fourreau 40 est assurée au moyen de joints toriques 21 et 23 simple ou multiple de type connu. Les tronçons 42b et 42c sont reliés par une première surface d'appui annulaire 45.

Une chambre secondaire 47 est délimitée ici par la première surface d'appui 45, le fourreau 40 et le tronçon 42c de l'indicateur 12. Cette chambre secondaire 47 communique par le canal 25 avec la chambre primaire 49.

Sur les figures 3 et 4, on voit que la soupape de remplissage 20 est intégrée dans un logement 43 pratiqué au niveau de l'extrémité libre de l'indicateur 12. Cette soupape constitue une paroi de fond 48 qui ferme la chambre primaire 49. La surface de la paroi de fond 48 est égale à la section transversale de la chambre 49. On voit encore que le lamage 11c du porte indicateur communique avec l'extérieur par l'intermédiaire d'un perçage 30 pratiqué dans la rondelle d'arrêt 4.

Le fonctionnement de cette variante de réalisation de la jauge de parage est sensiblement identique à celui du mode précédent de réalisation aux modifications suivantes près. L'huile est introduite à l'aide de la soupape 20 à travers la chambre primaire 49, puis passe dans la chambre principale 9 par l'intermédiaire de la rainure 27, l'extrémité 26 de l'indicateur étant en saillie par rapport à la rondelle 4 comme représenté sur la figure 3. L'huile s'écoule en même temps par le canal 25 de l'indicateur dans la chambre secondaire 47. Ainsi, sous la pression de l'huile, le piston libre 3 se déplace en comprimant l'azote dans la chambre 33, comme précédemment. Simultanément, l'huile présente dans la chambre secondaire 47 exerce une force sur la première surface d'appui 45 tendant à maintenir en appui la paroi annulaire 32 de l'indicateur 12 contre le piston libre 3 pendant le déplacement de ce dernier. Cette translation dans le même sens que le piston libre 3 est rendue possible, car la force engendrée par la pression de l'huile sur la première surface d'appui 45 est supérieure à la force appliquée sur une seconde surface d'appui 50, formée par la combinaison de la paroi 32 et du fond 48, l'aire de la première surface d'appui 45 étant supérieure à l'aire de la seconde surface d'appui 50. La quantité d'huile à injecter est visualisable grâce à l'extrémité 26 de l'indicateur 12 et le parage en huile est correct si cette extrémité affleure la face 28 de la rondelle d'arrêt 4, comme représenté sur la figure 4.

La longueur L1 séparant l'épaulement 22 de l'indicateur 12 et la paroi de fond 31 du porte indicateur 6 est supérieure à la longueur L2 entre l'extrémité 26 de l'indicateur et la face 28 de la rondelle 4. L'indicateur 12 peut ainsi se déplacer au delà de la face 28 vers l'intérieur du récupérateur. L'extrémité 26 se trouve alors en retrait par rapport à la face 28 et rend ainsi visualisable le surremplissage en huile.

Lorsque l'indicateur 12 se déplace, l'air contenu dans la chambre d'air 44 peut circuler vers le milieu extérieur, et vice versa, via le méplat 41 et le perçage 30 pour éviter un blocage pneumatique de l'indicateur 12 dans le porte indicateur 6.

## Revendications

1. Jauge de parage (1) pour récupérateur d'arme de gros calibre comprenant un tube (2) qui délimite une chambre de gaz (33) et une chambre principale d'un liquide incompressible (9) alimentée par une soupape de remplissage (20), chambres séparées par un piston (3), jauge destinée à indiquer le remplissage et/ou le surremplissage de la chambre principale (9) en liquide et comprenant des moyens supports (6, 16, 40) connectés à une extrémité du tube par des moyens de blocage (4,5) dans lesquels un indicateur (12) est engagé, indicateur (12) pouvant se translater graduellement à l'intérieur d'une chambre secondaire (8, 47) sous l'action de la pression du liquide s'exerçant sur des surfaces d'appui (29, 45) de l'indicateur et rendre ainsi visualisable la quantité de liquide injectée, jauge **caractérisée en ce qu'**elle comporte une chambre d'air (14, 44) prolongeant la chambre secondaire (8, 47) et séparée de cette dernière par l'indicateur (12), chambre d'air étant en communication avec le milieu extérieur afin de permettre la circulation de l'air lors des mouvements de translation de l'indicateur à l'intérieur des chambres d'air (14, 44) et secondaire (8, 47).

2. Jauge de parage (1) selon la revendication 1, **caractérisée en ce que** les surfaces, d'appui (29, 45) de l'indicateur (12) sont définies de telle sorte que la pression du liquide pousse l'indicateur dans le même sens que le piston (3).

3. Jauge de parage (1) selon la revendication 1, **caractérisée en ce que** les moyens de blocage sont constitués par une rondelle d'arrêt (4) et un écrou (5) vissé sur l'extrémité du tube (2), traversés tous deux par l'indicateur (12).

4. Jauge de parage (1) selon l'une quelconque des revendications 1 à 3, **caractérisée en ce que** les moyens supports sont constitués par un porte indicateur (6) et un fourreau (16, 40), ce dernier délimitant avec l'indicateur (12) ainsi qu'éventuellement avec le porte indicateur (6) la chambre secondaire (8, 47) qui communique avec la chambre principale (9) par l'intermédiaire d'une chambre primaire (24, 49), une première surface d'appui (29, 45) se trouvant dans la chambre secondaire et ayant une aire supérieure à celle d'une deuxième surface d'appui (36, 50) qui est formée par la combinaison d'une paroi (32) de l'extrémité de l'indicateur côté piston et d'un fond (34, 48) de la chambre primaire (24, 49), cette différence d'aires assurant la translation de l'indicateur dans le même sens que le piston (3) sous l'action de la pression du liquide.

5. Jauge de parage (1) selon la revendication 4, **caractérisé en ce que** le piston (3) comprend une rainure (27) reliant la chambre principale (9) à la chambre primaire (24, 49).

6. Jauge de parage (1) selon l'une quelconque des revendications 4 à 5, **caractérisée en ce que** la chambre primaire (24, 49) et la chambre secondaire (8, 47) communiquent par l'intermédiaire d'un canal (25) pratiqué dans l'indicateur (12).

7. Jauge de parage (1) selon l'une quelconque des revendications 4 à 6, **caractérisée en ce que** la chambre d'air (14) est délimitée par le porte indicateur (6) et l'indicateur (12).

8. Jauge de parage (1) selon la revendication 7, **caractérisée en ce que** la chambre d'air (14) est en communication avec le milieu extérieur par une gorge (18) et un canal de communication (15) pratiqués dans le porte indicateur (6) et par un perçage (30) réalisé dans le moyen de blocage (4).

9. Jauge de parage (1) selon l'une quelconque des revendications 7 à 8, **caractérisée en ce que** le fourreau (16) est engagé dans un alésage (11b) à une extrémité du porte indicateur (6), l'indicateur (12) étant supporté d'un côté par le porte indicateur (6) et de l'autre par le fourreau (16), des moyens d'étanchéité étant prévus respectivement entre l'indicateur (12) et le fourreau (16), l'indicateur (12) et le porte indicateur (6), le fourreau (16) et le porte indicateur (6), et le porte indicateur (6) et le tube (2).

10. Jauge de parage (1) selon l'une quelconque des revendications 7 à 9, **caractérisée en ce que** la soupape de remplissage (20) est solidaire du porte indicateur (6).

11. Jauge de parage (1) selon l'une quelconque des revendications 4 à 6, **caractérisée en ce que** la chambre d'air (44) est délimitée par le porte indicateur (6), le fourreau (40) et l'indicateur (12).

12. Jauge de parage (1) selon la revendication 11, **caractérisée en ce que** la chambre d'air (44) est en communication avec le milieu extérieur par un méplat (41) réalisé sur une génératrice extérieure du fourreau (40), et relié à un lamage (11c) usiné à l'extrémité du porte indicateur (6), coté soupape de remplissage (20) et un perçage (30) réalisé dans le moyen de blocage (4).

13. Jauge de parage (1) selon l'une quelconque des revendications 11 à 12, **caractérisée en ce que** le fourreau (40) est engagé dans un alésage (11b) à une extrémité du porte indicateur (6), l'indicateur (12) étant supporté d'un côté par le porte indicateur (6) et de l'autre par le fourreau (40), des moyens d'étanchéité étant prévus respectivement entre l'indicateur (12) et le fourreau (40), l'indicateur (12) et le porte indicateur (6), et le porte indicateur (6) et le tube (2).

14. Jauge de parage (1) selon l'une quelconque des revendications 11 à 13, **caractérisée en ce que** la soupape de remplissage (20) est montée à l'extrémité libre de l'indicateur (12).

## Patentansprüche

1. Füllstands-Peilstab (1) für eine Vorholeinrichtung einer Waffe mit großem Kaliber mit einem Rohr (2), das eine Kammer (33) mit Gas und eine Hauptkammer (9) mit einer nicht zusammendrückbaren Flüssigkeit begrenzt, die durch ein Füllventil (20) zugeführt wird, wobei die Kammern durch einen Kolben (3) getrennt werden und der Peilstab dafür vorgesehen ist, um die Füllung und/oder die Überfüllung der Hauptkammer (9) mit Flüssigkeit anzuzeigen, und mit Auflagemitteln (6, 16, 40), die durch Verriegelungsmittel (4, 5), in welchen ein Anzeiger (12) eingebunden ist, mit einem Ende des Rohres verbunden sind, wobei der Anzeiger (12) sich im Inneren einer Sekundärkammer (8, 47) unter der Einwirkung des Druckes der Flüssigkeit, der auf Stützflächen (29, 45) des Anzeigers wirkt, schrittweise verschieben kann und so die Menge der eingefüllten Flüssigkeit sichtbar macht, wobei der Peilstab **dadurch gekennzeichnet ist, dass** er eine Luftkammer (14, 44) umfasst, die die Sekundärkammer (8, 47) verlängert und von dieser Letzteren durch den Anzeiger (12) getrennt ist, wobei die Luftkammer mit der Außenatmosphäre in Verbindung steht, um die Zirkulation von Luft bei den Translationsbewegungen des Anzeigers im Inneren der Sekundärkammer (8, 47) und der Luftkammer (14, 44) zu gewährleisten.

2. Füllstands-Peilstab (1) nach Anspruch 1, **dadurch gekennzeichnet, dass** die Stützflächen (29, 45) des Anzeigers (12) in der Weise definiert sind, dass der Druck der Flüssigkeit den Anzeiger in dieselbe Richtung wie den Kolben (3) verschiebt.

3. Füllstands-Peilstab (1) nach Anspruch 1, **dadurch gekennzeichnet, dass** die Verriegelungsmittel durch eine Sicherungsscheibe (4) und eine auf das Ende des Rohres (2) geschraubte Mutter (5) gebildet werden, die beide vom Anzeiger (12) durchdrungen werden.

4. Füllstands-Peilstab (1) nach irgendeinem der Ansprüche 1 bis 3, **dadurch gekennzeichnet, dass** die Auflagemittel durch einen Anzeigerhalter (6) und eine Gleithülse (16, 40) gebildet werden, wobei die Letztere mit dem Anzeiger (12) sowie eventuell mit dem Anzeigerhalter (6) die Sekundärkammer (8, 47) begrenzt, welche mit der Hauptkammer (9) über eine Primärkammer (24, 49) in Verbindung steht, wobei sich eine erste Stützfläche (29, 45) in der Sekundärkammer befindet und eine größere Grundfläche aufweist, als die einer zweiten Stützfläche (36, 50), welche durch die Kombination aus einer Wand (32) des Kolbenseitigen Endes des Anzeigers und einem Boden (34, 48) der Primärkammer (24, 49) gebildet wird, wobei der Unterschied in den Grundflächen die Verschiebung des Anzeigers in dieselbe Richtung wie der Kolben (3) unter der Einwirkung des Druckes der Flüssigkeit sicherstellt.

5. Füllstands-Peilstab (1) nach Anspruch 4, **dadurch gekennzeichnet, dass** der Kolben (3) eine Nut (27) umfasst, die die Hauptkammer (9) mit der Primärkammer (24, 49) verbindet.

6. Füllstands-Peilstab (1) nach irgendeinem der Ansprüche 4 bis 5, **dadurch gekennzeichnet, dass** die Primärkammer (24, 49) und die Sekundärkammer (8, 47) mit Hilfe eines in den Anzeiger (12) eingearbeiteten Kanals (25) kommunizieren.

7. Füllstands-Peilstab (1) nach irgendeinem der Ansprüche 4 bis 6, **dadurch gekennzeichnet, dass** die Luftkammer (14) durch den Anzeigerhalter (6) und den Anzeiger (12) abgegrenzt wird.

8. Füllstands-Peilstab (1) nach Anspruch 7, **dadurch gekennzeichnet, dass** die Luftkammer (14) mit der Außenatmosphäre durch eine Nut (18) und einen in den Anzeigerhalter (6) eingearbeiteten Verbindungskanal (15) und durch eine in das Verriegelungsmittel (4) eingebrachte Bohrung (30) in Verbindung steht.

9. Füllstands-Peilstab (1) nach irgendeinem der Ansprüche 7 bis 8, **dadurch gekennzeichnet, dass** die Gleithülse (16) in eine Bohrung (11b) an einem Ende des Anzeigerhalters (6) in Eingriff gebracht wird, wobei der Anzeiger (12) einerseits durch den Anzeigerhalter (6) und andererseits durch die Gleithülse (16) gestützt wird, und Abdichtmittel jeweils zwischen dem Anzeiger (12) und der Gleithülse (16), dem Anzeiger (12) und dem Anzeigerhalter (6), der Gleithülse (16) und dem Anzeigerhalter (6) und dem Anzeigerhalter (6) und dem Rohr (2) vorgesehen sind.

10. Füllstands-Peilstab (1) nach irgendeinem der Ansprüche 7 bis 9, **dadurch gekennzeichnet, dass** das Füllventil (20) fest mit dem Anzeigerhalter (6) verbunden ist.

11. Füllstands-Peilstab (1) nach irgendeinem der Ansprüche 4 bis 6, **dadurch gekennzeichnet, dass** die Luftkammer (44) durch den Anzeigerhalter (6), die Gleithülse (40) und den Anzeiger (12) abgegrenzt wird.

12. Füllstands-Peilstab (1) nach Anspruch 11, **dadurch gekennzeichnet, dass** die Luftkammer (44) mit der Außenatmosphäre durch eine auf einer äußeren Mantellinie der Gleithülse (40) angebrachte Anflachung (41) in Verbindung steht und mit einer bearbeiteten Senkung (11c) am Füllventilseitigen (20) Ende des Anzeigerhalters (6) und einer in die Verriegelungsmittel (4) eingebrachte Bohrung (30) verbunden ist.

13. Füllstands-Peilstab (1) nach irgendeinem der Ansprüche 11 bis 12, **dadurch gekennzeichnet, dass** die Gleithülse (40) in eine Bohrung (11b) an einem Ende des Anzeigerhalters (6) in Eingriff gebracht wird, wobei der Anzeiger (12) einerseits durch den Anzeigerhalter (6) und andererseits durch die Gleithülse (40) gestützt wird, und Abdichtmittel jeweils zwischen dem Anzeiger (12) und der Gleithülse (40), dem Anzeiger (12) und dem Anzeigerhalter (6) und dem Anzeigerhalter (6) und dem Rohr (2) vorgesehen sind.

14. Füllstands-Peilstab (1) nach irgendeinem der Ansprüche 11 bis 13, **dadurch gekennzeichnet, dass** das Füllventil (20) am freien Ende des Anzeigers (12) angebracht ist.

## Claims

1. A trimming gauge (1) for the recuperator of a large calibre weapon comprising a tube (2) delimiting a gas chamber (33) and a main chamber (9) of an uncompressible liquid supplied by a replenishment valve (20), the chambers being separated by a piston (3), said gauge intended to indicate the replenishment and/or over-replenishment in liquid of the main chamber (9) and comprising support means (6, 16, 40) connected to one end of the tube by blocking means (4, 5) in which an indicator (12) is engaged, such indicator (12) being able to translate progressively inside a secondary chamber (8, 47) under the action of the liquid pressure exerted on the bearing surfaces (29, 45) of the indicator and thereby displaying the quantity of liquid injected, said gauge being **characterized in that** it incorporates an air chamber (14, 44) prolonging the secondary chamber (8, 47) and from which it is separated by the indicator (12), said air chamber communicating with the outside environment so as to allow air to circulate during the translational movements of the indicator inside the air (14, 44) and secondary (8, 47) chambers.

2. A trimming gauge (1) according to Claim 1, **characterized in that** the bearing surfaces (29, 45) of the indicator (12) are defined such that the liquid pressure pushes the indicator in the same direction as the piston (3).

3. A trimming gauge (1) according to Claim 1, **characterized in that** the blocking means are formed by a retaining washer (4) and a nut (5) screwed onto the end of the tube (2), through both of which the indicator (12) passes.

4. A trimming gauge (1) according to any one of Claims 1 to 3, **characterized in that** the support means are constituted by an indicator holder (6) and a sheath (16, 40), said sheath delimiting with the indicator (12), as well as possibly with the indicator holder (6) the secondary chamber (8, 47) that communicates with the main chamber (9) by means of a primary chamber (24, 49), a first bearing surface (29, 45) being in the secondary chamber and having an area that is greater than that of a second bearing surface (36, 50) formed by the combination of a wall (32) of the end of the indicator on the piston side and a bottom (34, 48) of the primary chamber (24, 49), said difference in area ensuring the translation of the indicator in the same direction as the piston (3) under the action of the liquid pressure.

5. A trimming gauge (1) according to Claim 4, **characterized in that** the piston (3) comprises a groove (27) connecting the main chamber (9) to the primary chamber (24, 49).

6. A trimming gauge (1) according to any one of Claims 4 to 5, **characterized in that** the primary chamber (24, 49) and the secondary chamber (8, 47) communicate by means of a channel (25) made in the indicator (12).

7. A trimming gauge (1) according to any one of Claims 4 to 6, **characterized in that** the air chamber (14) is delimited by the indicator holder (6) and the indicator (12).

8. A trimming gauge (1) according to Claim 7, **characterized in that** the air chamber (14) communicates with the outside environment by a communication groove (18) and channel (15) made in the indicator holder (6) and by a drill hole (30) made in the blocking means (4).

9. A trimming gauge (1) according to any one of Claims 7 to 8, **characterized in that** the sheath (16) is engaged in a bore (11b) at one end of the indicator holder (6), the indicator (12) being supported on one side by the indicator holder (6) and on the other by the sheath (16), sealing means being provided respectively between the indicator (12) and the sheath (16), the indicator (12) and the indicator holder (6), the sheath (16) and the indicator holder (6), and the indicator holder (6) and the tube (2).

10. A trimming gauge (1) according to any one of Claims 7 to 9, **characterized in that** the replenishment valve (20) is integral with the indicator holder (6).

11. A trimming gauge (1) according to any one of Claims 4 to 6, **characterized in that** the air chamber (44) is delimited by the indicator holder (6), the sheath (40) and the indicator (12).

12. A trimming gauge (1) according to Claim 11, **characterized in that** the air chamber (44) communicates with the outside environment by a meplat (41) made on an external generating line of the sheath (40), and is connected to a counter-sink (11c) machined in the end of the indicator holder (6) on the replenishment valve (20) side and a drill hole (30) made in the blocking means (4).

13. A trimming gauge (1) according to any one of Claims 11 to 12, **characterized in that** the sheath (40) is engaged in a bore (11b) at one end of the indicator holder (6), the indicator(12) being supported on one side by the indicator holder (6) and on the other by the sheath (40), sealing means being provided respectively between the indicator (12) and the sheath (40), the indicator (12) and the indicator holder (6), and the indicator holder (6) and the tube (2).

14. A trimming gauge (1) according to any one of Claims 11 to 13, **characterized in that** the replenishment valve (20) is mounted at the free end of the indicator (12).
